# EUROPÄISCHE PATENTSCHRIFT

(11) **EP 1 628 073 B1**
(45) Veröffentlichungstag und Bekanntmachung des Hinweises auf die Patenterteilung: **06.08.2008**
(21) Anmeldenummer: 05107632.1
(22) Anmeldetag: 19.08.2005
(51) Int. Cl.: F23G 7/06, F16K 25/02

(54) **Ventil für thermisch-regenerative Abgasreinigungsanlage und Abgasreinigungsanlage**
Valve for a thermal-regenerative exhaust gas purification system and exhaust gas purification system
Vanne d'une installation de purification de gaz d'échappement et installation de purification de gaz d'échappement

(30) Priorität: 20.08.2004 DE 102004040678
(43) Veröffentlichungstag der Anmeldung: 22.02.2006
(73) Patentinhaber: Müller, Rita, 63505 Langenselbold (DE)
(72) Erfinder:
(74) Vertreter: Patentanwälte Kewitz & Kollegen

(56) Entgegenhaltungen:
- EP-A- 1 258 678
- WO-A-89/06763

## Beschreibung

### Gebiet der Erfindung

Die vorliegende Erfindung betrifft ein Ventil für eine thermisch-regenerative Abgasreinigungsanlage gemäß dem Oberbegriff von Patentanspruch 1 sowie eine thermisch-regenerative Abgasreinigungsanlage mit zumindest einem solchen Ventil.

### Hintergrund der Erfindung

Solche Abgasreinigungsanlagen werden zum Entfernen von flüchtigen kohlenwasserstoffhaltigen Substanzen und weiterer organischer flüchtiger Bestandteile, wie beispielsweise Gerüchen, aus Abgasen bzw. der Abluft von industriellen oder handwerklichen Verfahren oder Anlagen eingesetzt. Dabei wird die Temperatur der Abgase bzw. der Abluft, worin die flüchtigen organischen Substanzen enthalten sind, mithilfe eines geeigneten Wärmetauschers erwärmt, bevor diese in eine Verbrennungskammer bei einer Temperatur von etwa 750°C eingelassen werden, um dort eine thermische Oxidation auszuführen. Bei der thermisch-regenerativen Abgasreinigung wird der größte Teil der beim Oxidieren abgegebenen Verbrennungswärme in einem festen Speichermedium gespeichert, beispielsweise in einem keramischen Material. Die gespeicherte Wärme nimmt anschließend das zu oxidierende (im Prozesszyklus folgende) Prozess- oder Abgas auf, wobei der Wärmetauscher ausschließlich der prozessinternen Wärmegewinnung dient. Je nach Konzentration der flüchtigen organischen Substanzen im Prozess- oder Abgas und dessen Temperatur läuft der Prozess autotherm ab oder ist zusätzliche Energie erforderlich.

Um einen hohen Wirkungsgrad und eine hoch effiziente Abgasreinigung zu gewährleisten, ist eine präzise und kontinuierliche Anlagensteuerung erforderlich, was mithilfe von Ventilen im Sinne der vorliegenden Anmeldung bewerkstelligt wird, die in der Anlage an geeigneten Stellen, wie nachfolgend ausgeführt, eingebaut sind, um die Abgasströmung geeignet zu sperren und zu regeln. Die allgemeine Betriebsweise von thermisch-regenerativen Abgasereinigungsanlagen wird beispielsweise in der US 6,039,927 beschrieben.

Da Abgasreinigungsanlagen der vorgenannten Art im Dauerbetrieb eingesetzt werden, mit beispielsweise bis zu 200.000 Zyklen pro Jahr, müssen die Ventile sehr dauerhaft und belastbar ausgelegt werden. Zu diesem Zweck offenbart US 6,039,927 ein Doppel-Drehklappenventil, dessen beide Drehklappen von einem Exenter-Antrieb im Gegentakt gesteuert werden. Drehklappenventile können jedoch hinsichtlich ihrer Dichtigkeit problematisch sein.

Ein hermetisches Dichtungsvermögen der Ventile auch im Dauerbetrieb ist jedoch für eine optimale und zukünftigen gesetzlichen Auflagen genügende Abgasreinigung erforderlich. Insbesondere kann nur mit hermetisch sperrenden Ventilen ein Übertritt von noch unbehandelten Abgasen in ein Gasauslassrohr der Abgasreinigungsanlage verhindert werden. Die Verwendung von Dichtungsringen und dergleichen im Ventilsitz hat sich jedoch für den Dauerbetrieb in thermisch-regenerativen Abgasreinigungsanlagen als nicht ausreichend erwiesen, insbesondere auch im Hinblick darauf, dass lange Austauschintervalle angestrebt sind.

Bekanntermaßen können hermetisch sperrende Ventile in besonders einfacher Weise dadurch ausgebildet werden, dass in einem Ventilgehäuse ein konischer Ventilsitz ausgebildet ist, der mit einem korrespondierend ausgebildeten konischen Ventilkörper zusammenwirkt. Das Dichtungsvermögen von Ventilen in thermisch-regenerativen Abgasreinigungsanlagen wird durch Schmutzablagerungen sowie durch mechanische Beschädigungen im Bereich des Ventilsitzes und des zugeordneten Verschlusskörpers beeinträchtigt. Mechanische Beschädigungen des Ventilsitzes und/oder Verschlusskörpers können auch die unmittelbare Folge von Schmutzablagerungen in diesen Bereichen sein. Bekanntermaßen neigen Schmutzablagerungen dazu sich lokal anzuhäufen, was Undichtigkeiten von hermetisch dichtenden Ventilen noch weiter fördert.

Um Schmutzablagerungen im Bereich eines konischen Ventilsitzes zu verhindern, wird in FR 707,275 und FR 679,464 ein konischer Ventilsitz offenbart, in den eine Mehrzahl von radialen Bohrungen einmünden, die mit einem Gebläse bzw. Drucklufterzeuger in Verbindung stehen. Unmittelbar bevor das Ventil schließt, strömt aus den radialen Bohrungen ein Spülgas in den Ringspalt zwischen dem Verschlusskörper und dem konischen Ventilsitz 1, um den Ventilsitz und den Verschlusskörper zu spülen und Schmutzablagerungen zu beseitigen.

Ein Ventil gemäß dem Oberbegriff von Anspruch 1 mit einem konischen Ventilsitz ist in EP 1 258 678 A2 offenbart. Eine Mehrzahl von radialen Bohrungen münden beabstandet zueinander in den Ventilsitz ein. Um auch Schmutzablagerungen, die weiter entfernt zu einer Bohrung auf dem Ventilsitz und/oder dem Verschlusskörper vorliegen, wirkungsvoll zu beseitigen, ist in dem Ventilsitz eine umlaufende Nut vorgesehen, in die die Mehrzahl von radialen Bohrungen einmünden und die das Spülgas in Umfangsrichtung gleichmäßig verteilt. Der Aufbau des Ventils mit mehreren radialen Bohrungen ist jedoch vergleichsweise aufwendig. Sollen die mehreren radialen Bohrungen mit einem externen Gebläse verbunden werden, so ist ein aufwendiges Rohrsystem erforderlich. Die Wirkung des Spülgases während des Schließens des Ventils ist auch nicht gleichmäßig. Denn die Spülwirkung wird durch die Breite des Ringspalts zwischen dem Ventilsitz und dem Verschlusskörper mit beeinflusst, sodass die Reinigungswirkung des Spülgases auch von der Stellung des Verstellkörpers abhängt.

DE 201 18 418 U1 offenbart eine Abluftreinigungsvorrichtung zur thermischen und/oder katalytischen Reinigung von Abluft, die verbrennbare Bestandteile enthält. Zum Öffnen und Schließen eines Rohgaskanals sowie weiterer Kammern in der Abgasreinigungsvorrichtung werden Tellerventile verwendet, deren Ventilkörper mittels einer Bewegungseinrichtung zwischen einer Schließstellung und einer Offenstellung bewegbar ist. Das Tellerventil weist jeweils einen die Zutrittsöffnung umgebenden, ringförmigen Ventilsitz und einen die Zutrittsöffnung überdeckenden, kreisscheibenförmigen Ventilkörper auf. Partikel in dem Rohgasstrom können zu einer Ablagerung im Bereich des Ventilsitzes führen, was die Dichtigkeit der Tellerventile beeinträchtigen kann.

DE 197 20 205 A1 offenbart ein Verfahren und eine Anlage zur Reinigung von mit Stickoxiden beladenen Abgasen. In der Anlage werden Hubventile vergleichbar zu den Tellerventilen gemäß der DE 201 18 418 U1 verwendet.

US 5,134,945 offenbart eine thermisch-regenerative Abgasreinigungsanlage mit nach Art von Flachschiebern ausgeführten Ventilen. Partikel in der zu reinigenden Abgasluftströmung können ebenfalls zu Ablagerungen im Bereich des Ventilsitzes führen, wie bei den vorgenannten Ventiltypen, so dass auch hier eine hermetische Dichtigkeit der Ventile nicht gewährleistet werden kann, insbesondere nicht im Dauerbetrieb.

WO 89/06763 offenbart ein Verfahren und eine Vorrichtung zum Schutz und zur Stützung einer Dichtung einer Ventilvorrichtung. Am Außenumfangsrand des Ventilkörpers ist eine umlaufende Dichtung in einer Rille aufgenommen, welche in der Schließstellung gegen den Ventilsitz dichtet. Oberhalb des Ventilsitzes befindet sich quasi in Verlängerung des Ventilsitzes ein Verschlussteil. Wenn der Ventilkörper in die Offenstellung zum Öffnen des Ventils verstellt wird, gelangt schließlich die Dichtung am Außenumfangsrand des Ventilkörpers in Anlage zu dem Verschlussteil, so dass in der Offenstellung der Ventilvorrichtung die Wirkung des Ventilsitzes in Bezug auf die Dichtung durch das Verschlussteil substituiert wird. Somit ist die Dichtung auch in der Offenstellung des Ventils geschützt, beispielsweise auch gegen Ablagerungen aufgrund von Partikeln in der zu regelnden Durchtrittsströmung. Offenbart ist auch eine Ausführungsform mit zwei in Verstellrichtung des Ventilkörper zueinander beabstandeten umlaufenden Dichtungen am Außenumfangsrand des Ventilkörpers, wobei in den Ringspalt zwischen den beiden umlaufenden Dichtungen ein in dem Ventilkörper ausgebildeter Strömungskanal einmündet, zur Leckageabführung und/oder Reinigungsmittelabführung. Wie jedoch vorstehend ausgeführt wurde, ist die Verwendung von Dichtungsringen und dergleichen im Ventilsitz für den Dauerbetrieb von thermisch-regenerativen Abgasreinigungsanlagen nicht zufrieden stellend, insbesondere auch im Hinblick darauf, dass erfindungsgemäß lange Austauschintervalle angestrebt werden sollen.

### Zusammenfassung der Erfindung

Aufgabe der vorliegenden Erfindung ist es, ein Ventil für eine thermisch-regenerative Abgasreinigungsanlage in einfacher und kostengünstiger Weise bereitzustellen. Gemäß einem weiteren Gesichtspunkt der vorliegenden Erfindung soll ein solches Ventil bereitgestellt werden, bei dem der Ventilsitz gleichmäßig von Schmutzablagerungen befreit wird. Gemäß einem weiteren Gesichtspunkt der vorliegenden Erfmdung soll auch eine thermisch-regenerative Abgasreinigungsanlage mit zumindest einem solchen Ventil bereitgestellt werden. Diese und weitere Aufgaben werden gemäß der vorliegenden Erfindung durch ein Ventil mit den Merkmalen nach Anspruch 1 sowie durch eine thermisch-regenerative Abgasreinigungsanlage mit den Merkmalen nach Anspruch 13 gelöst. Weitere vorteilhafte Ausführungsformen sind Gegenstand der rückbezogenen Unteransprüche.

Die Erfindung geht aus von einem Ventil für eine thermisch-regenerative Abgasreinigungsanlage, das in ein Verbindungsrohr der Abgasreinigungsanlage einsetzbar ist, welches ein Gasein- oder Gasauslassrohr für den Ein- oder Austritt eines unbehandelten oder behandelten Abgases mit einer Behandlungskammer verbindet, mit einem konischen Ventilsitz und einem korrespondierend ausgebildeten Verschlusskörper, um eine von dem Ventilsitz ausgebildete Öffnung zu verschließen, wobei der Verschlusskörper mit einem axial beweglichen Schaft verbunden ist, um den Verschlusskörper zu verstellen. Erfmdungsgemäß zeichnet sich das Ventil dadurch aus, dass der Verschlusskörper eine obere Verschlusskörperplatte und eine untere Verschlusskörperplatte umfasst, die beabstandet zueinander gehaltert sind, wobei der Schaft eine axiale Innenbohrung aufweist, die mit einem zwischen den Verschlusskörperplatten ausgebildeten Zwischenraum verbunden ist, um den Zwischenraum unmittelbar mit der Außenumgebung oder mit einem externen Gebläse oder Drucklufterzeuger zu verbinden.

Erfindungsgemäß weist der Ventilsitz einen vorteilhaft einfachen Aufbau auf, mit einem abgeschrägten Innenumfangsrand, in welchem keine Nut oder dergleichen ausgebildet zu werden braucht. Somit ist der Herstellungsaufwand gering, fallen bei der Herstellung keine störenden Grate an, die die Dichtigkeit des Ventils beeinträchtigen könnten, und ist eine hermetische Dichtigkeit des Ventils auch im Dauerbetrieb ohne weiteres möglich. Vorteilhaft ist ferner, dass nur eine einzige zentrale Bohrung, nämlich eine Innenbohrung in dem Ventilschaft, ausreicht, um dem Ventilsitz Spülluft zuzuführen. Somit ist kein aufwendiges Rohrsystem erforderlich, um dem Ventilsitz Spülluft von einem externen Gebläse oder einem Drucklufterzeuger zuzuführen.

Aufgrund des bevorzugt zweistückigen Aufbaus des Verschlusskörpers mit zwei zueinander beabstandeten Platten kann der Zwischenraum sehr genau kontrolliert werden. Insbesondere kann dieser auch sehr schmal gemacht werden, sodass Spülluft sehr kontrolliert in den Ventilsitz eingeblasen werden kann. Beim vertikalen Verstellen des Verschlusskörpers kann ferner der gesamte Bereich des Ventilsitzes gleichmäßig gespült werden, sodass Schmutzablagerungen und dergleichen an dem Ventilsitz noch wirkungsvoller entfernt werden können. Schmutzablagerungen werden sich aufgrund der Schwerkraft zumeist an dem schräg abwärts geneigten Innenumfangsrand des Ventilsitzes ablagern, nicht jedoch an den abgeschrägten Umfangsrändern der Verschlusskörperplatten. Die aus dem Zwischenraum zwischen den beiden Verschlusskörperplatten radial auswärts austretende Spülluft ist deshalb für die Beseitigung von Schmutzablagerungen in dem Ventilbereich ausreichend.

Bei mit Unterdruck betriebenen Abgasreinigungsanlagen trägt der Zwischenraum ferner in besonders wirkungsvoller Weise zu einer hermetischen Dichtigkeit des Ventils bei. Denn der über die Innenbohrung des Ventilschafts mit der Außenumgebung oder mit einem externen Gebläse bzw. einem Drucklufterzeuger verbundene Zwischenraum befindet sich sowohl gegenüber dem Bereich oberhalb des Verschlusskörpers als auch gegenüber dem Bereich unterhalb des Verschlusskörpers, also gegenüber dem Gaseinlass- oder Gasauslassrohr, unter einem gewissen Überdruck. Deshalb wird im Falle etwaiger Undichtigkeiten an dem Umfangsrand der oberen und/oder unteren Verschlusskörperplatte Spülluft aus dem Zwischenraum über die Undichtigkeit in den Bereich oberhalb des Verschlusskörpers und/oder unterhalb des Verschlusskörpers einströmen, sodass ein unmittelbarer Gasaustausch zwischen den Bereichen oberhalb und unterhalb des Verschlusskörpers wirkungsvoll ausgeschlossen ist. Deshalb kann bei dem erfindungsgemäßen Ventil selbst für den Fall etwaiger Schmutzablagerungen und/oder mechanischen Beschädigungen ein unerwünschter Übertritt von unbehandelten Abgasen wirkungsvoll verhindert werden. Dabei kann der Strömungswiderstand des Zwischenraums durch geeignete Wahl der Höhe des Zwischenraums in vorteilhaft einfacher Weise vorgegeben werden.

Um dem Zwischenraum Spülluft zuzuführen, kann an einem unteren Ende des Schafts, das aus dem Gaseinlass- oder Gasauslassrohr herausragt, eine Öffnung vorgesehen sein, um die Innenbohrung des Ventilschafts mit der Außenumgebung oder mit dem externen Gebläse oder Drucklufterzeuger zu verbinden. Diese Öffnung kann unmittelbar in der Umfangswand des Ventilschafts vorgesehen sein oder durch die Innenbohrung des Ventilschafts unmittelbar ausgebildet sein.

Gemäß einer weiteren Ausführungsform kann an dem unteren Ende des Schafts eine Abschlussplatte vorgesehen sein, in welcher die Öffnung ausgebildet ist, vorzugsweise mittig.

Gemäß einer weiteren Ausführungsform ist die Abschlussplatte an dem unteren Ende des Ventilschafts aus einem gehärteten Metall gebildet, sodass ein nockenartiges, vertikal bewegbares Verstellelement zum Verstellen des Ventilschafts und des Verschlusskörpers verwendet werden kann. Dies ermöglicht die zentrale Steuerung mehrere Ventile mittels einer einzigen, drehbeweglich gelagerten Antriebswelle, die eine Mehrzahl von nockenartigen Verstellelementen treibt.

Bevorzugt wird der Ventilschaft bzw. die an seinem unteren Ende befindliche Abschlussplatte aufgrund der Schwerkraft permanent gegen das bewegliche Verstellelement gedrückt. Gemäß einer bevorzugten Ausführungsform wirkt dabei das Verstellelement so mit dem unteren Ende des Ventilschafts bzw. der Abschlussplatte zusammen, dass beim Verstellen des Ventilschafts eine Drehantriebskraft erzeugt wird, die den Schaft und den mit diesem verbundenen Verschlusskörper langsam dreht. Vorteilhaft ist, dass der Ventilsitz und der aus den Platten gebildete Verschlusskörper gleichmäßiger abgenutzt werden. Ferner wird aufgrund der langsamen Drehbewegung vermieden, dass stets dieselben Bereiche des Ventilsitzes und der Verschlusskörperplatten in Anlage geraten, um die Öffnung in dem Ventilsitz zu verschließen. Somit kann erfindungsgemäß vermieden werden, dass sich mechanische Beschädigungen, Materialfehler und dergleichen lokal immer mehr verstärken, bis das Ventil an Bereichen, wo sich die mechanischen Beschädigungen, Materialfehler und dergleichen im Dauerbetrieb sehr stark vergrößert haben, undicht wird.

Um diese Drehbewegung hervorzurufen, kann das Verstellelement exzentrisch mit dem unteren Ende des Ventilschafts bzw. der Abschlussplatte zusammenwirken und/oder können an dem unteren Ende des Ventilschafts bzw. auf der Abschlussplatte oder auf der Oberseite des Verstellelements abgeschrägte und/oder gewölbte Oberflächen vorgesehen sein.

Gemäß einer weiteren Ausführungsform ist auf der Oberseite des Verstellelements eine Rolle oder ein Wälzkörper vorgesehen, um die vorgenannte Drehbewegung des Ventilschafts und des Verschlusskörpers hervorzurufen.

Gemäß einer weiteren Ausführungsform ist an dem oberen Ende des Ventilschafts, wo der Schaft mit den beiden Verschlusskörperplatten verbunden ist, beispielsweise mittels eines hülsenartigen Verbindungselements, zumindest eine Öffnung vorgesehen, um die Innenbohrung mit dem Zwischenraum zu verbinden. Diese Öffnungen können beispielsweise als Umfangsschlitze ausgebildet sein. Gemäß einer bevorzugten Variante genügt es, an dem oberen Ende des Ventilschafts eine einzelne Öffnung vorzusehen, was die Herstellungskosten weiter reduziert.

Gemäß einer weiteren Ausführungsform sind die Verschlusskörperplatten mittels einer Mehrzahl von Verbindungselementen miteinander verbunden, die in dem Zwischenraum nahe den Umfangsrändern der Verschlusskörperplatten angeordnet sind. Vorteilhaft ist, dass, weil sich die Verschlusskörperplatten auf der kurzen Strecke zwischen den außen angeordneten Verbindungselementen und den Außenumfangsrändern nur sehr wenig durchbiegen können, dass die Lagebeziehung zwischen den abgeschrägten Umfangsrändern der Verschlusskörperplatten genau vorgegeben werden kann, sodass sich eine hermetische Dichtigkeit des Ventils in einfacher Weise erzielen lässt.

Gemäß einer weiteren Ausführungsform ist die Mehrzahl von Verbindungselementen in Bezug auf den Schaft punktsymmetrisch angeordnet, sodass sich etwaige Verspannungen oder mechanische Belastungen gleichmäßig auf den Verschlusskörper verteilen können und die Lagebeziehung der für die hermetische Dichtigkeit des Ventils wichtigen Umfangsränder praktisch unverändert bleiben kann.

Gemäß einem weiteren Gesichtspunkt der vorliegenden Erfindung wird ferner eine thermisch-regenerative bzw. thermisch-rekuperative Abgasreinigungsanlage bereitgestellt, die sich durch zumindest ein erfindungsgemäßes Ventil auszeichnet, das hermetisch dicht ist, um einen unerwünschten Übertritt von unbehandeltem Abgas bzw. Abluft in das Gasauslassrohr zu unterbinden.

Bevorzugt werden die Ventile mittels einer zentralen Antriebswelle angetrieben, um die Abgasströmung in der Abgasreinigungsanlage geeignet zu sperren oder zu regeln.

### Figurenübersicht

Nachfolgend wird die Erfindung in beispielhafter Weise und unter Bezugnahme auf die beigefügten Zeichnungen beschrieben werden, woraus sich weitere Merkmale, Vorteile und zu lösende Aufgaben ergeben werden und worin:
- Fig. 1: in einer schematischer Seitenansicht eine thermisch-regenerative Abgasreinigungsanlage gemäß der vorliegenden Erfindung darstellt;
- Fig. 2: in einer schematischen Schnittansicht ein Ventil gemäß der vorliegenden Erfindung darstellt;
- Fig. 3: in einer schematischen Draufsicht das Ventil gemäß der Fig. 2 darstellt;
- Fig. 4: in einem schematischen Teilschnitt einen Ausschnitt der Abgasreinigungsanlage gemäß der Fig. 1 darstellt, um den Betrieb des Ventils gemäß der Fig. 2 zu erläutern;
- Fig. 5: in einer schematischen Vorderansicht die Abgasreinigungsanlage gemäß der Fig. 1 darstellt; und
- Fig. 6: in einem schematischen Teilschnitt einen vergrößerten Ausschnitt der Fig. 4 darstellt; um zu erläutern, wie der Ventilschaft verstellt wird.

In den Figuren bezeichnen identische Bezugszeichen identische oder im Wesentlichen gleich wirkende Elemente oder Elementgruppen.

### Ausführliche Beschreibung bevorzugter Ausführungsbeispiele

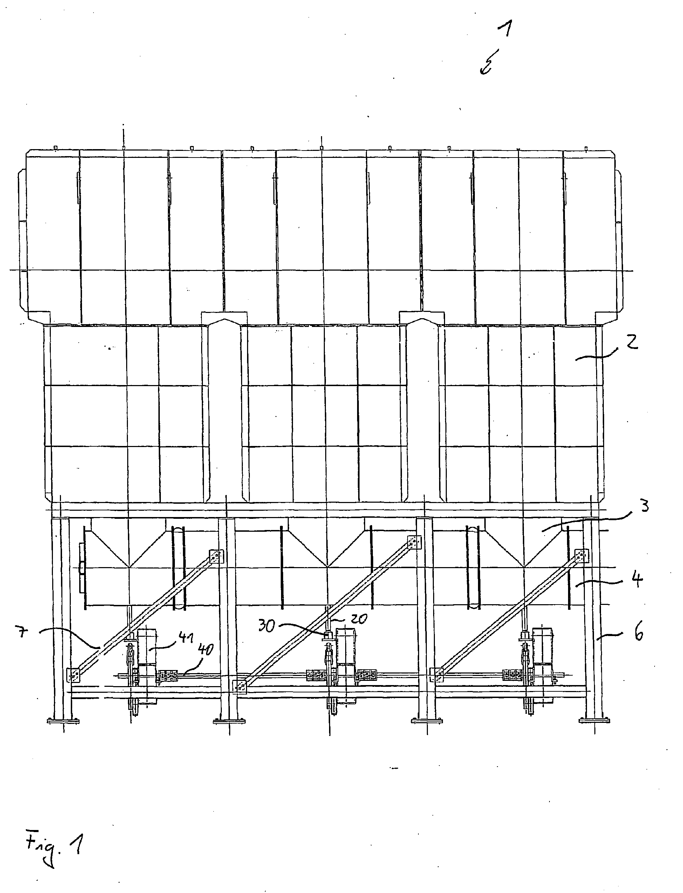

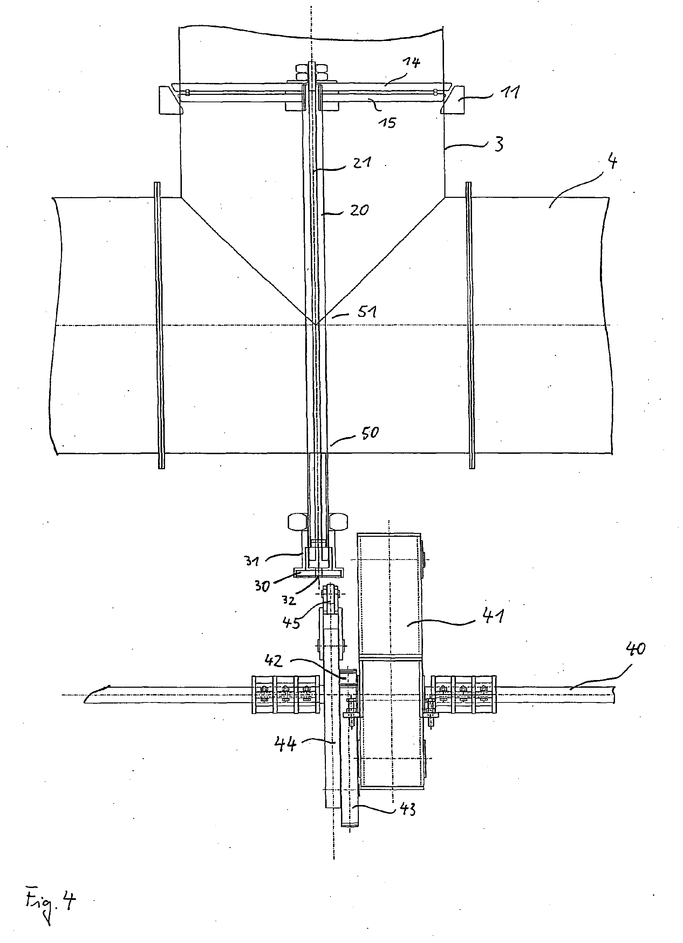

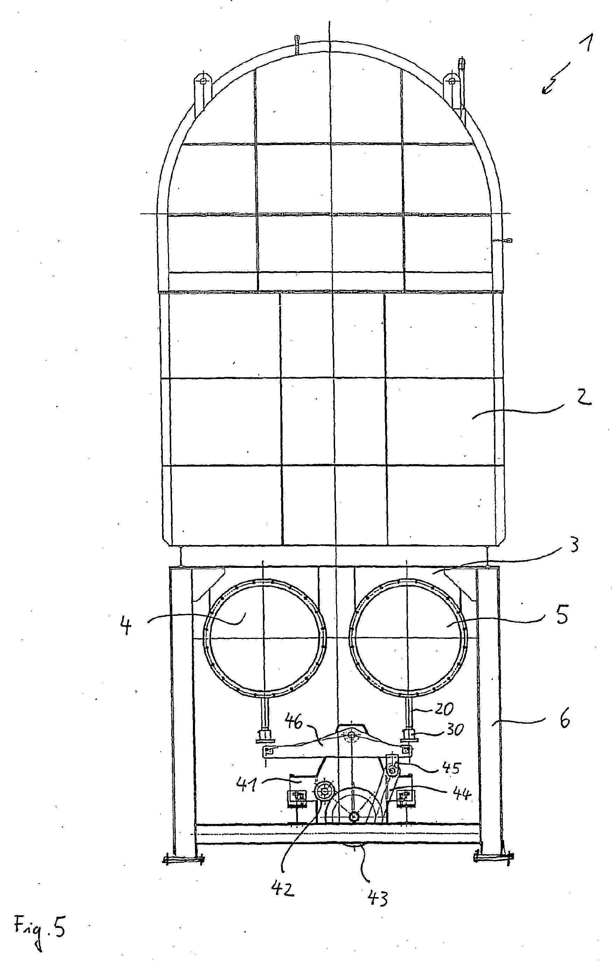

Die Fig. 1 zeigt in einer schematischen Seitenansicht eine thermisch-regenerative Abgasreinigungsanlage gemäß der vorliegenden Erfindung. Gemäß der Fig. 1 umfasst die Abgasreinigungsanlage 1 eine Mehrzahl, bevorzugt eine ungeradzahlige Mehrzahl, von Behandlungskammern 2, die über ein jeweiliges vertikales Verbindungsrohr 3 mit einem Gaseinlassrohr 4 bzw. einem Gasauslassrohr 5 (vgl. Fig. 5) verbunden sind. Unterhalb des Gaseinlassrohrs 4 sind mehrere Lagerböcke 41 angeordnet, in jeweiliger Zuordnung zu einer Behandlungskammer 2, die eine zentrale Antriebswelle 40 und ein jeweiliges Getriebe lagern, um die Drehbewegung der Antriebswelle 40 in eine vertikale Verstellkraft zum Anheben und Absenken der Ventilschäfte 20 umzusetzen, was nachfolgend anhand der Figuren 4-6 noch ausführlicher beschrieben werden wird.

Wie in der Fig. 4 gezeigt, ragt ein unteres Ende des Ventilschafts 20 aus dem Gaseinlassrohr 4 heraus. Der Ventilschaft 20 ist in dichtenden Hülsen (vgl. Fig. 4) beweglich gelagert, um durch Anheben und Absenken der beiden einen Verschlusskörper bildenden Verschlusskörperplatten 14, 15 das Ventil 10 zu öffnen und zu schließen. Auf diese Weise kann in der Abgasreinigungsanlage eine Abgasströmung gesperrt und geregelt werden. Wie in der Fig. 4 gezeigt, ist das insgesamt mit dem Bezugszeichen 10 bezeichnete Ventil in ein vertikales Verbindungsrohr 3 eingesetzt, und zwar im Übergangsbereich zwischen dem zugeordneten Gaseinlassrohr 4 (oder Gasauslassrohr 5) und der zugeordneten Behandlungskammer.

Wie in der Fig. 1 gezeigt, ist die Abgasreinigungsanlage 1 auf einem Gestell 6 aufgeständert, das mit Querstreben 7 versteift ist und dessen Höhe so gewählt ist, dass der Antrieb 41 zum Verstellen der Ventilschäfte 20 unmittelbar unterhalb der Abgasreinigungsanlage 1 angeordnet werden kann und auch Wartungsarbeiten unterhalb der Abgasreinigungsanlage ohne weiteres ausgeführt werden können.

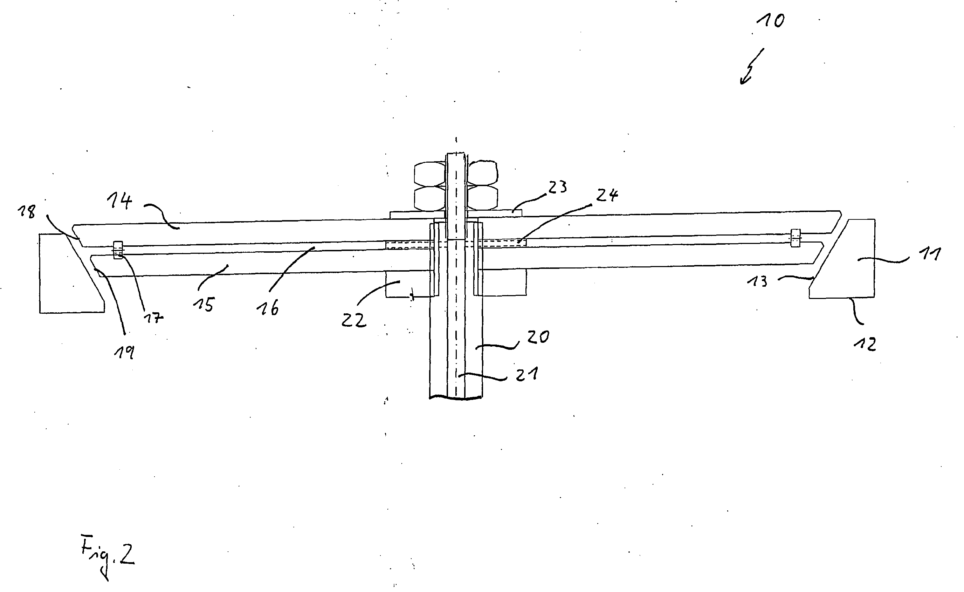

Wie in der Fig. 2 gezeigt, umfasst das Ventil 10 einen Ventilsitz 11, einen bei dem dargestellten Ausführungsbeispiel von zwei Verschlusskörperplatten 14, 15 ausgebildeten Verschlusskörper und den Ventilschaft 20 zum Anheben und Absenken des Verschlusskörpers, um die von dem Ventilsitz 11 ausgebildete Öffnung zu öffnen und zu schließen. Der Ventilsitz 11 ist mittels Flanschverbindungen (nicht gezeigt) in das vertikale Verbindungsrohr 3 dicht eingesetzt. Der Ventilsitz 11 weist eine flache Unterseite 12 auf, zur Verbindung, Aufnahme oder Ausbildung eines Flansches, sowie eine unter einem spitzen Winkel, der bei dem dargestellten Ausführungsbeispiel etwa 60 Grad beträgt, schräg aufwärts verlaufenden Ventilsitzfläche 13. Die Ventilsitzfläche 13 bildet einen nach oben geöffneten, konischen Ventilsitz aus, mit einem flachen, strukturlosen Innenumfangsrand, der schräg nach oben weist.

Der Ventil-Verschlusskörper umfasst zwei parallel angeordnete Verschlusskörperplatten 14, 15, die mittels Verbindungselementen 17 starr miteinander verbunden sind. Zwischen den beiden Verschlusskörperplatten 14, 15 wird ein schmaler Zwischenraum bzw. Spalt 16 ausgebildet, dessen Höhe durch die Verbindungselemente 17 vorgegeben ist und bei dem dargestellten Beispiel deutlich kleiner als die Dicke der Verschlusskörperplatten 14, 15 ist. Die Außenumfangsränder 18, 19 der Verschlusskörperplatten 14, 15 sind korrespondierend zu der gegenüberliegenden abgeschrägten Ventilsitzfläche 13 ausgebildet, sodass die von dem Ventilsitz 11 ausgebildete Öffnung hermetisch versperrt werden kann, wenn der Ventilschaft 20 so weit abgesenkt ist, dass die Außenumfangsränder 18, 19 unmittelbar an der Ventilsitzfläche 13 anliegen. Beim weiteren Anheben des Ventilschafts 20 wird zwischen den Außenumfangsrändern 18, 19 und der gegenüberliegenden Ventilsitzfläche 13 ein Ringspalt ausgebildet, dessen Breite von der vertikalen Stellung des Ventilschafts 20 abhängt.

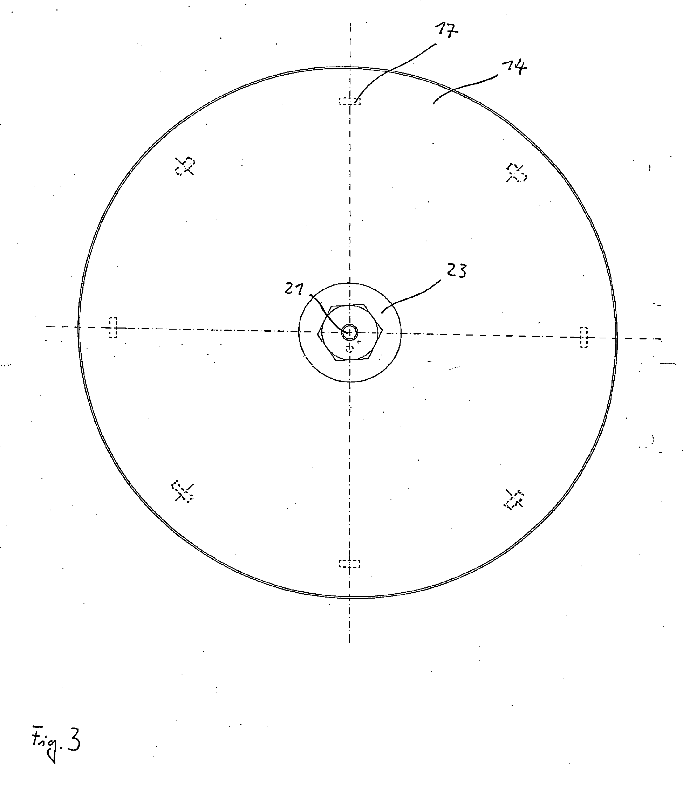

Gemäß der Fig. 2 sind die Verbindungselemente 17 nahe den Umfangsrändern 18, 19 der Verschlusskörperplatten 14, 15 angeordnet, sodass die relative Lagebeziehung der Umfangsränder 18, 19 durch mechanische Belastungen, Spanungen, Biegemomente und dergleichen praktisch nicht verändert wird. Wie der schematischen Draufsicht gemäß der Fig. 3 entnommen werden kann, sind die Verbindungselemente 17 in einer in Bezug auf die Innenbohrung 21 des Ventilschafts punktsymmetrischen Anordnung angeordnet, sodass Spannungen gleichmäßig auf die Verschlusskörperplatten verteilt werden. Insgesamt sind die Stärken der Verschlusskörperplatten 14, 15 (vgl. Fig. 2) ausreichend stark gewählt, sodass sich die Verschlusskörperplatten 14, 15 über den Durchmesser der von dem Ventilsitz 11 ausgebildeten Öffnung allenfalls in einem vernachlässigbaren Maße durchbiegen und das Ventil 10 hermetisch dicht schließt.

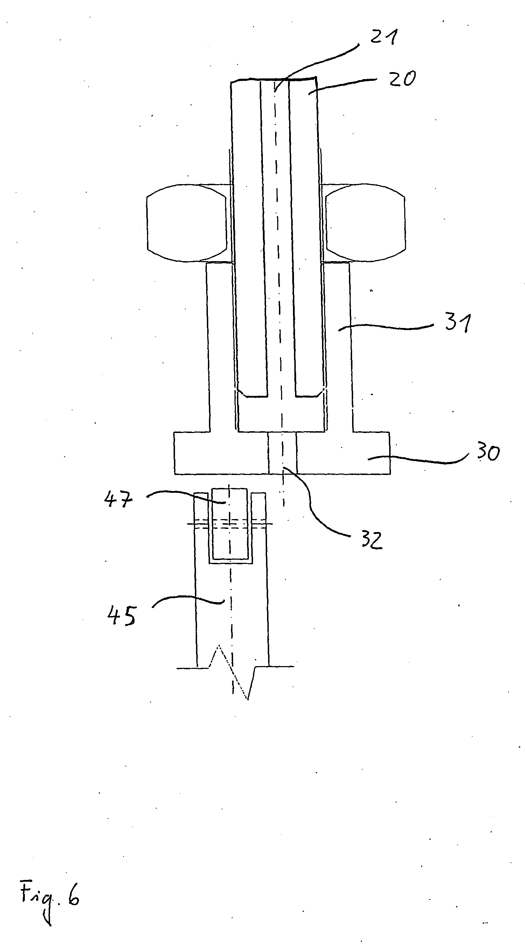

Gemäß der Fig. 2 ist der Ventilschaft 20 mittels eines zylindrischen Verbindungselements 22 mit den beiden Verschlusskörperplatten 14, 15 starr verbunden. Oberhalb des Ventilschafts 20 befindet sich auf der Oberseite der oberen Verschlusskörperplatte 14 eine Platte 23 zur Beschwerung des Verschlusskörpers. Gemäß der Fig. 2 weist der Ventilschaft 20 eine axiale Innenbohrung 21 auf, die sich, wie in der Fig. 6 gezeigt, bis zum unteren Ende des Ventilschafts 20 erstreckt, wo eine Öffnung 32 vorgesehen ist, um die Innenbohrung 21 mit der Außenumgebung (bei Atmosphärendruck) oder einem externen Gebläse bzw. Drucklufterzeuger zu verbinden. Wie in der Fig. 2 gezeigt, münden radiale Bohrungen 24 in die axiale Innenbohrung 21 des Ventilschafts 20 ein, sodass der Zwischenraum 16 über die radialen Bohrungen 24, die axiale Innenbohrung 21 und die Öffnung am unteren Ende des Ventilschafts 20 mit der Außenumgebung oder mit dem externen Gebläse bzw. Drucklufterzeuger verbunden ist. Der Strömungswiderstand kann durch geeignete Wahl der Durchmesser der Öffnung am unteren Ende des Ventilschafts, der axialen Innenbohrung 21 und der radialen Bohrung 24 sowie der Höhe des Zwischenraums bzw. Spalts 16 geeignet vorgegeben werden. Wenngleich in der Fig. 2 mehrere radiale Bohrungen 24 in dem Verbindungselement 22 dargestellt sind, wird erfindungsgemäß bevorzugt, in dem Verbindungselement 22 nur eine Öffnung, beispielsweise einen im Wesentlichen rechteckförmigen Umfangsschlitz vorzuziehen, da so ein besonders einfacher mechanischer Aufbau des Ventils 10 erzielt werden kann.

In der Sperrstellung des Ventils 10, in der die abgeschrägten Außenumfangsränder 18, 19 unmittelbar an der abgeschrägten Ventilsitzfläche 13 anliegen, wird ein hermetisch dichter Sitz des Verschlusskörpers erzielt. Selbst im Falle etwaiger mechanischer Beschädigungen an der abgeschrägten Ventilsitzfläche 13 und/oder den Außenumfangsrändern 18, 19 kann diese hermetische Dichtigkeit erfindungsgemäß wie folgt aufrechterhalten werden. Erfindungsgemäß wird die Abgasreinigungsanlage bevorzugt mit einem erheblichen Unterdruck betrieben, sodass oberhalb und unterhalb des Ventils 10 ein Unterdruck vorherrscht, der kleiner als etwa 0,1 bar ist und bevorzugt etwa 40 bis 60 mbar beträgt. Gegenüber dem Zwischenraum 16, der über die radialen Bohrungen 24, die axiale Innenbohrung 21 und die Öffnung am unteren Ende des Ventilschafts 20 mit der Außenumgebungen (bei Atmosphärendruck) oder einem externen Gebläse oder Drucklufterzeuger verbunden ist, liegt somit erfindungsgemäß eine erhebliche Druckdifferenz vor. Für den Fall, dass eine Undichtigkeit im Bereich des Außenumfangsrands 19 der unteren Verschlusskörperplatte 15 vorliegt, wird aufgrund der erheblichen Druckdifferenz Spülluft aus dem Zwischenraum 16 durch die Undichtigkeit in den Bereich unterhalb des Ventils 10 strömen, sodass ein Übertritt von Abgasen bzw. Abluft von dem Bereich unterhalb des Ventils 10 in den Zwischenraum 16 verhindert werden kann. Für den Fall einer etwaigen Undichtigkeit im Bereich des Außenumfangsrands 18 der oberen Verschlusskörperplatte 14 wird Spülluft aus dem Zwischenraum 16 über die Undichtigkeit in den Bereich oberhalb des Ventils 10 strömen, sodass ein Übertritt von Abgasen bzw. von Abluft von dem Bereich oberhalb des Ventils 10 in den Zwischenraum 16 verhindert wird. Insgesamt kann somit erfindungsgemäß ein Übertritt von Abgasen bzw. Abluft von dem Bereich unterhalb (oberhalb) des Ventils 10 in den Bereich oberhalb (unterhalb) des Ventils 10 verhindert werden, erfüllt also das erfindungsgemäße Ventil 10 weiter seine Aufgabe als hermetisch dichtendes Ventil.

Aufgrund der Schwerkraft werden sich Schmutzablagerungen, beispielsweise Rußpartikel und dergleichen, bevorzugt auf den nach oben weisenden abgeschrägten. Ventilsitzflächen 13 ablagern. Solche Schmutzablagerungen können im Dauerbetrieb des Ventils ebenfalls zu mechanischen Beschädigungen am Ventilsitz und/oder dem Verschlusskörper führen, mit der unerwünschten Folge einer Undichtigkeit des Ventils. Solche Schmutzablagerungen auf der abgeschrägten Ventilsitzfläche 13 können jedoch durch die Spülluft, die bei geöffnetem Ventil aus dem Zwischenraum 16 radial auswärts strömt, fortgeblasen werden. Die Strömungsgeschwindigkeit der aus dem Zwischenraum 16 radial austretenden Spülluft wird in Wesentlichen durch die Höhe des Zwischenraums bzw. Spalts 16 bestimmt. Beim Anheben und Absenken des Verschlusskörpers wird dabei die gesamte Ventilsitzfläche 13, die zu der hermetischen Dichtigkeit des Ventils 10 beiträgt, gleichmäßig gespült. Schmutzablagerungen werden auf diese Weise wirkungsvoll entfernt.

Nachfolgend wird anhand der Figuren 4 bis 6 die vertikale Verstellung des Verschlusskörpers beschrieben werden. Gemäß der schematischen Vorderansicht der Fig. 5 ist unterhalb des Gaseinlassrohrs 4 und des Gasauslassrohrs 5 ein Lagerbock 41 angeordnet, der eine zentrale Antriebswelle 40 (vgl. Fig. 1) lagert. Wie in der Fig. 4 gezeigt, wird die Drehantriebskraft der Antriebswelle 40 über zwei miteinander kämmende Zahnräder 42, 43 auf die exzentrisch an dem Zahnrad 43 angelenkte Koppelstange 44 übertragen, die an das Verbindungsglied 45 angelenkt ist, das mit einem Kipphebel 46 verbunden ist, der um eine Schwenkachse, der vertikal über der Drehmitte der Antriebswelle 40 und des Zahnrads 43 liegt, schwenkbeweglich an dem Lagerbock 41 gelagert ist. Wie vorstehend beschrieben, ist das Eigengewicht des Verschlusskörpers, etwaiger Beschwerungsplatten und des Ventilschafts so gewählt, dass das untere Ende des Ventilschafts 20 permanent an dem jeweiligen Ende des Kipphebels 46 anliegt. Beim Verkippen des Kipphebels 46 werden somit die beiden zugeordneten Ventilschäfte 20 gegenläufig betätigt. Wird beispielsweise der Kipphebel 46 im Uhrzeigersinn verkippt, so wird der linke Ventilschaft 20 angehoben, um das zugeordnete Ventil zu öffnen, und wird der rechte Ventilschaft 20 in gleichem Maße abgesenkt, um das zugeordnete Ventil zu sperren. Die Öffnungsstellung der beiden einem jeweiligen Lagerbock 41 zugeordneten Ventile wird durch die jeweilige Winkelstellung der Koppelstange 44 in eindeutiger Weise vorgegeben. Durch geeignete Anordnung der Koppelstangen 44 können die Ventile der Abgasreinigungsanlage geeignet getaktet betrieben werden, um eine Abgasströmung in der Abgasreinigungsanlage 1 geeignet zu sperren und zu regeln. Ganz besonders bevorzugt sind die Koppelstangen 44 unter gleichen Winkelabständen zueinander versetzt angeordnet, wie dies näher in der EP 1 258 678 A2 beschrieben ist, deren Inhalt im Wege der Bezugnahme ausdrücklich zu Offenbarungszwecken in der vorliegenden Anmeldung mit beinhaltet sei.

An den in der Fig. 4 mit den Bezugszeichen 50 und 51 bezeichneten Bereichen ist der Ventilschaft 20 axial verschieblich gelagert. Zu diesem Zweck sind an den genannten Bereichen 50, 51 geeignete Lagerbuchsen vorgesehen (nicht gezeigt). Erfindungsgemäß ist der Ventilschaft 20 in diesen Lagerbuchsen ferner um seine Längsachse drehbeweglich gelagert, sodass sich Ventilschaft 20 und Verschlusskörper gemeinsam um die Längsachse des Ventilschafts 20 drehen können. Beim Verstellen des Ventils 10 wird, wie nachfolgend noch ausführlicher beschrieben werden wird, auch eine langsame Drehbewegung des Ventilschafts 20 um seine Längsachse induziert, sodass im Dauerbetrieb des Ventils 10 nicht immer dieselben Bereiche der abgeschrägten Ventilsitzfläche 13 und der Außenumfangsränder 18, 19 der beiden Verschlusskörperplatten 14. 15 aneinander anliegen, sondern diese Bereiche wechseln. Dies führt erfindungsgemäß zu einer sehr gleichmäßigen Abnutzung der Ventilsitzfläche 13 und der Außenumfangsränder 18, 19 und beugt einseitigen mechanischen Belastungen, Überbeanspruchungen und der lokalen Ausbildung von mechanischen Beschädigungen der Ventilsitzfläche und/oder der Außenumfangsränder 18, 19 im Dauerbetrieb vor.

Wie in der Fig. 4 gezeigt, ist die Längsachse des Ventilschafts 20 zu der Mittellinie der Koppelstange 44 versetzt. Somit wirkt das Verbindungsglied 44 bzw. der Anlagebereich auf der Oberseite des Kipphebels 46 (in der Fig. 4 nicht gezeigt) außermittig auf die Abschlussplatte 30 an dem unteren Ende des Ventilschafts 20 ein. Reibungskräfte, die beim Anheben und Absenken des Ventilschafts 20 aufgrund des Gleitkontakts zwischen der Abschlussplatte 30 und dem Verbindungsglied 45 bzw. der Anlagefläche auf der Oberseite des Kipphebels (in der Fig. 4 nicht gezeigt) vorherrschen, induzieren ein Drehmoment, das zu einer Drehung des Ventilschafts 20 um dessen Längsachse führt. Dieses Drehmoment kann durch weitere Maßnahmen verstärkt werden. So kann die Oberseite des Verbindungsglieds 45 bzw. die Anlagefläche auf der Oberseite des Kipphebels (in der Fig. 4 nicht gezeigt) abgeschrägt oder gewölbt sein und kann die Unterseite der Abschlussplatte 30 an dem unteren Ende des Ventilschafts 20 abgeschrägt oder gegenläufig gewölbt sein. Oder, wie in der Fig. 6 gezeigt, kann an dem oberen Ende des Verbindungsglieds 45 bzw. auf der Oberseite des Kipphebels (in der Fig. 6 nicht gezeigt) eine Rolle 47 oder ein Wälzkörper gelagert sein.

Wie dem Fachmann beim Studium der vorstehenden Beschreibung ohne weiteres ersichtlich sein wird, können zahlreiche Modifikationen vorgenommen werden, ohne von dem Schutzbereich der vorliegenden Erfindung, wie in den beigefügten Patentansprüchen beansprucht, abzuweichen. Solche Modifikationen sollen deshalb ausdrücklich von dem Schutzbereich der beigefügten Patentansprüche mit umfasst sein.

### Bezugszeichenliste

- 1: Thermisch-regenerative Abgasreinigungsanlage
- 2: Behandlungskammer
- 3: Vertikales Verbindungsrohr
- 4: Gaseinlassrohr
- 5: Gasauslassrohr
- 6: Gestell
- 7: Querstrebe
- 10: Ventil
- 11: Ventilsitz
- 12: Unterseite des Ventilsitzes
- 13: Abgeschrägte Ventilsitzfläche
- 14: Obere Verschlusskörperplatte
- 15: Untere Verschlusskörperplatte
- 16: Zwischenraum
- 17: Verbindungselement
- 18: Rand der oberen Verschlusskörperplatte 14
- 19: Rand der unteren Verschlusskörperplatte 14
- 20: Schaft
- 21: Längsbohrung
- 22: Verbindungselement
- 23: Platte
- 24: Radiale Bohrung
- 30: Abschlussplatte
- 31: Hülse
- 32: Öffnung
- 40: Antriebswelle
- 41: Lagerbock
- 42: Zahnrad
- 43: Zahnrad
- 44: Koppelstange
- 45: Verbindungsglied
- 46: Kipphebel
- 47: Rad
- 50: Lagerbereich
- 51: Lagerbereich

## Patentansprüche

1. Ventil für eine thermisch-regenerative Abgasreinigungsanlage, das in ein Verbindungsrohr (3) der Abgasreinigungsanlage (1) einsetzbar ist, welches ein Gasein- oder Gasauslassrohr (4, 5) für den Ein- oder Austritt eines unbehandelten oder behandelten Abgases mit einer Behandlungskammer (2) verbindet, mit einem konischen Ventilsitz (11) und einem korrespondierend ausgebildeten Verschlusskörper, um eine von dem Ventilsitz (11) ausgebildete Öffnung zu verschließen, wobei der Verschlusskörper mit einem Schaft (20) verbunden ist, um den Verschlusskörper zu verstellen, **dadurch gekennzeichnet, dass** der Verschlusskörper eine obere Verschlusskörperplatte (14) und eine untere Verschlusskörperplatte (15) umfasst, die beabstandet zueinander gehaltert sind, wobei der Schaft (20) eine axiale Innenbohrung (21) aufweist, die mit einem zwischen den Verschlusskörperplatten (14, 15) ausgebildeten Zwischensaum (16) verbunden ist, um den Zwischenraum (16) unmittelbar mit der Außenumgebung oder mit einem externen Gebläse oder Drucklufterzeuger zu verbinden.

2. Ventil nach Anspruch 1, bei dem ein unteres Ende des Schafts (20) aus dem Gaseinlass- oder Gasauslassrohr (4, 5) herausragt, wobei an dem unteren Ende eine Öffnung (32) vorgesehen ist, um die Innenbohrung (21) mit der Außenumgebung oder mit dem externen Gebläse oder Drucklufterzeuger zu verbinden.

3. Ventil nach dem vorhergehenden Anspruch, bei dem das untere Ende des Schafts (20) eine Abschlussplatte (30) aufweist, vorzugsweise aus einem gehärteten Metall, wobei die Öffnung (32) in der Abschlussplatte (30) vorgesehen ist.

4. Ventil nach dem vorhergehenden Anspruch, bei dem nahe dem unteren Ende des Schafts (20) ein vertikal bewegbares Verstellelement (44-46) gelagert ist, um in Anlage mit der Abschlussplatte (30) den Schaft (20) und den Verschlusskörper (14, 15) zu verstellen, wobei das Verstellelement dergestalt in die Abschlussplatte eingreift, dass beim Verstellen eine Drehbewegung des Schafts (20) und des Verschlusskörpers (14, 15) bewirkt wird.

5. Ventil nach dem vorhergehenden Anspruch, wobei auf einer Oberseite des Verstellelements (45) eine Rolle (47) oder ein Wälzkörper vorgesehen ist.

6. Ventil nach einem der vorhergehenden Ansprüche, bei dem an einem oberen Ende des Schafts (20) zumindest eine, bevorzugt eine einzelne, Öffnung (24) vorgesehen ist, um die Innenbohrung (21) mit dem Zwischenraum (16) zu verbinden.

7. Ventil nach einem der vorhergehenden Ansprüche, bei dem die Verschlusskörperplatten (14, 15) abgeschrägte Umfangsränder (18, 19) aufweisen, um in Anlage zu einem Innenumfangsrand (13) des Ventilsitzes (11) die in dem Ventilsitz ausgebildete Öffnung zu verschließen.

8. Ventil nach einem der vorhergehenden Ansprüche, bei dem die Verschlusskörperplatten (14, 15) starr miteinander verbunden sind.

9. Ventil nach dem vorhergehenden Anspruch, bei dem die Verschlusskörperplatten (14, 15) mittels einer Mehrzahl von Verbindungselementen (17) verbunden sind, die in dem Zwischenraum (16) nahe den Außenumfangsrändern (18, 19) der Verschlusskörperplatten (14, 15) angeordnet sind, vorzugsweise in einer in Bezug auf den Schaft (20) punktsymmetrischen Anordnung.

10. Ventil nach einem der vorhergehenden Ansprüche, bei dem der Zwischenraum (16) ringförmig ausgebildet ist und die gesamte Grundfläche der Verschlusskörperplatten (14, 15) überspannt, wobei der Schaft (20) und ein Verbindungselement (22) zum Verbinden des Schafts (20) mit den Verschlusskörperplatten (14, 15) mittig angeordnet sind.

11. Ventil nach einem der vorhergehenden Ansprüche, bei dem ein Verhältnis einer Höhe des Zwischenraums (16) zu Dicken der Verschlusskörperplatten (14, 15) kleiner als 1 ist, bevorzugt deutlich kleiner als 1.

12. Ventil nach einem der vorhergehenden Ansprüche, wenn rückbezogen auf Anspruch 4, bei dem dem Verstellelement ein Lageraufbau (41) zugeordnet ist, der unterhalb des zugeordneten Gaseinlass- oder Gasauslassrohrs (4, 5) angeordnet ist und eine Antriebswelle (40) lagert, wobei ein Getriebe (42-45) vorgesehen ist, um eine Drehbewegung der Antriebswelle (40) in eine Kippbewegung eines Kipphebels umzusetzen, der schwenkbeweglich an dem Lageraufbau (41) gelagert ist und als Verstellelement wirkt, um mit dem unteren Ende des Schafts (20) zusammenzuwirken und den Schaft (20) zu verstellen.

13. Thermisch-regenerative Abgasreinigungsanlage, **gekennzeichnet durch** zumindest ein Ventil (10) nach einem der vorhergehenden Ansprüche, um eine zugeordnete Öffnung eines Ventilsitzes (11) zu verschließen und zu öffnen, wobei das jeweilige Ventil in ein Verbindungsrohr (3) der Abgasreinigungsanlage (1) eingesetzt ist, das ein Gaseinlass- oder Gasauslassrohr (4, 5) für den Ein- oder Austritt eines unbehandelten oder behandelten Abgases mit einer zugeordneten Behandlungskammer (2) verbindet.

14. Thermisch-regenerative Abgasreinigungsanlage nach dem vorhergehenden Anspruch, mit mehreren Behandlungskammern (2) und zugeordneten Ventilen (10), um eine Abgasströmung in der Abgasreinigungsanlage (1) zu sperren oder zu regeln, wobei die Ventile (10) über einen Winkelbereich von 360 Grad unter gleichen Winkelabständen getaktet verstellbar sind.

15. Thermisch-regenerative Abgasreinigungsanlage nach einem der beiden vorhergehenden Ansprüche, die mit einem Druck in der zumindest einen Behandlungskammer (2) von kleiner als etwa 0,1 bar betrieben wird.

## Claims

1. A valve for a, thermal-regenerative waste gas purification installation, which may be installed in the connecting duct (3) of the waste gas purification installation connecting a gas inlet duct or gas outlet duct (4, 5) for inlet or outlet of an untreated or treated waste gas with a treatment chamber (2), comprising a conical valve seat (11) and an obturator of corresponding shape, in order to close an orifice formed by the valve seat (11), said obturator being connected with a stem (20) for actuation of the obturator, **characterized in that** said obturator comprises an upper obturator plate (14) and a lower obturator plate (15), which are mounted spaced apart from one another, wherein said stem (20) comprises an axial internal bore (21), which is connected with a space (16) formed between the obturator plates (14, 15), in order to connect the space (16) directly with the outside environment or with an external fan or air compressor.

2. The valve according to claim 1, wherein a lower end of the stem (20) projects out from the gas inlet duct or gas outlet duct (4, 5), wherein at the lower end an orifice (32) is provided, in order to connect the internal bore (21) with the outside environment or with the external fan or air compressor.

3. The valve according to the preceding claim, wherein the lower end of the stem (20) comprises a cover plate (30), preferably of a hardened metal, and wherein the orifice (32) is provided in the cover plate (30).

4. The valve according to the preceding claim, wherein a vertically movable actuating element (44-46) is mounted close to the lower end of the stem (20), in order, in contact with the cover plate (30), to actuate the stem (20) and the obturator (14, 15), wherein the actuating element engages with the cover plate in such a manner that a rotational movement of the stem (20) and of the obturator (14, 15) is effected on actuation.

5. The valve according to the preceding claim, wherein a roller (47) or rolling member is provided at the top of the actuating element (45).

6. The valve according to any of the preceding claims, wherein at least one orifice (24), preferably a single orifice, is provided at an upper end of the stem (20) in order to connect the internal bore (21) with the space (16).

7. The valve according to any of the preceding claims, wherein the obturator plates (14, 15) comprise bevelled circumferential edges (18, 19), in order, when in contact with an inner circumferential edge (13) of the valve seat (14), to close the orifice formed in the valve seat.

8. The valve according to any of the preceding claims, wherein the obturator plates (14, 15) are rigidly connected to one another.

9. The valve according to the preceding claim, wherein the obturator plates (14, 15) are connected by means of a plurality of connecting elements (17), which are disposed within said space (16) close to the outer circumferential edges (18, 19) of the obturator plates (14, 15), preferably in a point-symmetrical arrangement relative to the stem (20).

10. The valve according to any of the preceding claims, wherein the space (16) is annular in shape and spans the entire base area of the obturator plates (14, 15), wherein the stem (20) and a connecting element (22) for connecting the stem (20) with the obturator plates (14, 15) is arranged centrally.

11. The valve according to any of the preceding claims, wherein the ratio of the height of the space (16) to the thickness of the obturator plates (14, 15) is less than 1, preferably distinctly less than 1.

12. The valve according to any of the preceding claims, if dependent on claim 4, wherein a support structure (41) is associated with the actuating element, which is arranged below the associated gas inlet duct or gas outlet duct (4, 5) and on which a drive shaft (40) is mounted, wherein a transmission (42-45) is provided in order to convert a rotational movement of the drive shaft (40) into a rocking motion of a rocker arm, which is mounted swivellably on the support structure (41) and acts as an actuating element in order to cooperate with the lower end of the stem (20) and to actuate the stem (20).

13. A thermal-regenerative waste gas purification installation, **characterized by** at least one valve (10) as claimed in any of the preceding claims for closing and opening an associated orifice of a valve seat (11), wherein the respective valve is installed in a connecting duct (3) of the waste gas purification installation (1), which connects a gas inlet duct or gas outlet duct (4, 5) for inlet or outlet of an untreated or treated waste gas with an associated treatment chamber (2).

14. The thermal-regenerative waste gas purification installation according to the preceding claim, comprising a plurality of treatment chambers (2) and associated valves (10) in order to shut off or control a waste gas flow in the waste gas purification installation (1), wherein the valves (10) are cyclically actuatable at identical angular distances over an angular range of 360 degrees.

15. The thermal-regenerative waste gas purification installation according to any of the two preceding claims, which is operated at a pressure in said at least one treatment chamber (2) of less than approx. 0.1 bar.

## Revendications

1. Vanne d'une installation de purification de gaz d'échappement à régénération thermique, qui peut être insérée dans un tube de raccordement (3) de l'installation de purification de gaz d'échappement (1), lequel relie un tube d'admission ou d'évacuation de gaz (4, 5) pour l'entrée ou la sortie de gaz d'échappement non traités ou traités à une chambre de traitement (2), avec un siège de soupape (11) conique et un obturateur réalisé de manière correspondante pour obturer une ouverture réalisée par le siège de soupape (11), l'obturateur étant relié à une tige (20) pour déplacer l'obturateur; **caractérisée en ce que** l'obturateur présente une plaque d'obturateur supérieure (14) et une plaque d'obturateur inférieure (15), qui sont maintenues à distance l'une de l'autre, la tige (20) présentant un perçage intérieur (21) axial, qui est relié à un espace intermédiaire (16) formé entre les plaques d'obturateur (14, 15) pour relier directement l'espace intermédiaire (16) à l'environnement extérieur ou à un ventilateur ou générateur d'air comprimé externe.

2. Vanne selon la revendication 1, dans laquelle une extrémité inférieure de la tige (20) dépasse du tube d'admission ou d'évacuation de gaz (4, 5), une ouverture (32) étant prévue au niveau de l'extrémité inférieure pour relier le perçage intérieur (21) à l'environnement extérieur ou au ventilateur ou générateur d'air comprimé externe.

3. Vanne selon la revendication précédente, dans laquelle l'extrémité inférieure de la tige (20) présente une plaque de fermeture (30), de préférence en un métal trempé, l'ouverture (32) étant prévue dans la plaque de fermeture (30).

4. Vanne selon la revendication précédente, dans laquelle un élément de réglage (44-46) verticalement mobile est logé à proximité de l'extrémité inférieure de la tige (20) pour déplacer la tige (20) et l'obturateur (14, 15) en appui contre la plaque de fermeture (30), l'élément de réglage prenant dans la plaque de fermeture de manière à induire, lors du déplacement, un mouvement de rotation de la tige (20) et de l'obturateur (14, 15).

5. Vanne selon la revendication précédente, dans laquelle un galet (47) ou un corps de roulement est prévu sur une face supérieure de l'élément de réglage (45).

6. Vanne selon l'une quelconque des revendications précédentes, dans laquelle au moins une, de préférence une seule, ouverture (24) est prévue au niveau d'une extrémité supérieure de la tige (20) pour relier le perçage intérieur (21) à l'espace intermédiaire (16).

7. Vanne selon l'une quelconque des revendications précédentes, dans laquelle les plaques d'obturateur (14, 15) présentent des bords périphériques (18, 19) biseautés pour obturer l'ouverture réalisée dans le siège de soupape en appui contre un bord périphérique intérieur (13) du siège de soupape (11).

8. Vanne selon l'une quelconque des revendications précédentes, dans laquelle les plaques d'obturateur (14, 15) sont reliées de manière rigide les unes aux autres.

9. Vanne selon la revendication précédente, dans laquelle les plaques d'obturateur (14, 15) sont reliées au moyen d'une pluralité d'éléments de raccordement (17), qui sont agencés dans l'espace intermédiaire (16) à proximité des bords périphériques extérieurs (18, 19) des plaques d'obturateur (14, 15), de préférence dans un agencement à symétrie ponctuelle par rapport à la tige (20).

10. Vanne selon l'une quelconque des revendications précédentes, dans laquelle l'espace intermédiaire (16) est réalisé de façon annulaire et l'ensemble de la surface de base des plaques d'obturateur (14, 15) est recouvert, la tige (20) et un élément de raccordement (22) étant agencés au milieu pour relier la tige (20) aux plaques d'obturateur (14, 15).

11. Vanne selon l'une quelconque des revendications précédentes, dans laquelle un rapport entre une hauteur de l'espace intermédiaire (16) et des épaisseurs des plaques d'obturateur (14, 15) est inférieur à 1, de préférence nettement inférieur à 1.

12. Vanne selon l'une quelconque des revendications précédentes, lorsque référence est faite à la revendication 4, dans laquelle une structure support (41) est associée à l'élément de réglage, laquelle est agencée sous le tube d'admission ou d'évacuation de gaz (4, 5) associé et loge un arbre d'entraînement (40), une transmission (42, 45) étant prévue pour convertir un mouvement de rotation de l'arbre d'entraînement (40) en un mouvement de basculement d'un culbuteur, qui est logé de manière basculante au niveau de la structure support (41) et agit comme élément de réglage pour coopérer avec l'extrémité inférieure de la tige (20) et déplacer la tige (20).

13. Installation de purification de gaz d'échappement à régénération thermique, **caractérisée par** au moins une vanne (10) selon l'une quelconque des revendications précédentes pour fermer et ouvrir une ouverture associée d'un siège de soupape (11), la vanne respective étant insérée dans un tube de raccordement (3) de l'installation de purification de gaz d'échappement (1), qui relie un tube d'admission ou d'évacuation de gaz (4, 5) pour l'entrée ou la sortie de gaz d'échappement non traités ou traités à une chambre de traitement (2) associée.

14. Installation de purification de gaz d'échappement à régénération thermique selon la revendication précédente, avec plusieurs chambres de traitement (2) et des vannes (10) associées pour bloquer ou réguler un écoulement de gaz d'échappement dans l'installation de purification de gaz d'échappement (1), les vannes (10) pouvant être déplacées de manière cadencée sur une plage angulaire de 360 degrés à des distances angulaires identiques.

15. Installation de purification de gaz d'échappement à régénération thermique selon l'une quelconque des deux revendications précédentes, qui est exploitée avec une pression inférieure à environ 0,1 bar dans l'au moins une chambre de traitement (2).
